(19)

**Europäisches Patentamt**

**European Patent Office**

**Office européen des brevets**

(11) **EP 4 575 017 A1**

(12) **EUROPEAN PATENT APPLICATION**

(43) Date of publication:
25.06.2025 Bulletin 2025/26

(21) Application number: 23219716.0

(22) Date of filing: 22.12.2023

(51) International Patent Classification (IPC):
$C22B\ 1/00^{(2006.01)}$     $C22B\ 1/02^{(2006.01)}$
$C22B\ 5/02^{(2006.01)}$     $C22B\ 7/00^{(2006.01)}$
$C22B\ 9/10^{(2006.01)}$     $C22B\ 23/02^{(2006.01)}$
$C22B\ 26/12^{(2006.01)}$     $H01M\ 10/54^{(2006.01)}$
$C22B\ 1/14^{(2006.01)}$

(52) Cooperative Patent Classification (CPC):
C22B 1/02; C22B 1/005; C22B 1/14; C22B 5/02;
C22B 7/001; C22B 9/10; C22B 23/02; C22B 26/12;
H01M 10/54

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Umicore**
**1000 Brussels (BE)**

(72) Inventor: **YAGI, Ryohei**
**2250 Olen (BE)**

(74) Representative: **Clauswitz, Kai-Uwe Wolfram**
**Umicore AG & Co. KG**
**Rodenbacher Chaussee 4**
**63457 Hanau-Wolfgang (DE)**

(54) **SMELTING OF PYROLYZED BATTERY**

(57) The present patent application relates to a method of recovering valuable metals from waste batteries comprising
- a **pyrolysis step** comprising pyrolysis of the waste batteries at a temperature of from about 700°C to about 1300°C, thus obtaining pyrolyzed batteries;
- a **size reduction step,** comprising size reduction of the pyrolyzed batteries;
- a **smelting step,** comprising smelting the pyrolyzed, size reduced waste batteries at temperatures of 1350°C or higher under oxidizing conditions. The method shows improved control of the smelting step and the temperature, reduces the amount of slag generated as well as the release of explosive gas.

EP 4 575 017 A1

**Description**

With increasing popularity of mobile devices and electromobility, both fields of technology highly dependent on rechargeable batteries, the recycling thereof has become of interest and a field of commercial activity.

WO 2022/248436 shows a process for the recovery of Ni and Co from Li-ion batteries or their waste, comprising the steps of providing a furnace lined with magnesia-bearing refractory bricks; providing a charge comprising slag formers and Li-ion batteries or their waste, and smelting the charge in reducing conditions, thereby obtaining an alloy containing the major part of nickel, cobalt and a slag.

Due to oxidation of aluminum in pyrometallurgical battery recycling significant amounts of slag is produced, which requires addition of a flux to decrease its melting point. In addition, the aluminum metal is lost to the slag. Also, process control becomes more troublesome because of the intense heat generation by oxidation of aluminum during the smelting step. Moreover, depending on the carbon content and on how the smelting process is run, intense release of explosive gas (carbon monoxide) is possible during smelting step due to oxidation of remaining plastic and electrolyte in battery, which makes post combustion more difficult.

WO 2012/111690 shows a method for recovering metal from waste batteries comprising the steps of a pre-oxidation step wherein the battery is roasted under oxidizing conditions and is consecutively smelted, wherein slag and an alloy of the desired metals is obtained and the desired metals are separated.

This method reduces the problem of carbon monoxide evulsion during smelting step by employing a pre-oxidation step but aluminum recovery still isn't possible.

JP 7006438 shows a method for recycling of lithium ion batteries comprising the steps of S1: oxidative pretreatment pyrolysis of lithium ion battery, S2: crushing the remains of the lithium ion battery, S3: oxidative pyrolysis step to oxidize and remove carbon from the remains of the lithium ion battery followed by S4: reduction melting step to obtain a reduced product. This method allows recovery of aluminum, but requires an additional oxidative pyrolysis step S3 to remove all remaining carbon to achieve better process control in reduction smelting step S4. This will require additional reductant (e.g. cokes) and heat source to reduce carbon-free feed.

Common aluminum separation techniques require physical separation of shredded battery powder, which leads to loss of valuable metals such as nickel, cobalt, and lithium.

These problems are solved by the method of recovering valuable metals from waste batteries according to the claims. In the method of the subject patent application no second oxidative pyrolysis step is needed.

The method of recovering valuable metals from waste batteries comprises -
a **pyrolysis step** comprising pyrolysis of the waste batteries at a temperature of from about 700°C to about 1300°C, thereby obtaining pyrolyzed batteries;

- a **size reduction step,** comprising size reduction of the pyrolyzed batteries;

- a **smelting step,** comprising smelting the pyrolyzed, size reduced waste batteries at temperatures of 1350°C or higher under oxidizing conditions.

The method may contain additional steps.

Waste batteries may contain end-of-life batteries, off-spec batteries, production scrap, spent lithium ion batteries and may in particular comprise lithium ion batteries. Said products should however contain appreciable amounts of at least Nickel (Ni), Aluminum (Al) and Carbon (C), but may also contain a metal selected from the group consisting of Cobalt (Co), Lithium (Li), Manganese (Mn) and combinations thereof.

The pyrolysis step removes volatile liquids such as a liquid electrolyte and the casing of the waste batteries. The outer casing of the waste batteries is typically made of aluminum. Specifically, the "outer casing" includes module casings as well as cell casings and pack casings and can contain 5 to 50 weight percent of aluminum of the entire waste batteries. This does not mean that there is no aluminum left within the waste batteries.

The pyrolysis step also allows the separation and removal of aluminum, which can be recovered as a valuable resource, and reduces the amount of slag produced and the heat generated in the smelting step by oxidation of the aluminum.

In the pyrolysis step, the aluminum may be separated from the other parts of the waste batteries by, for example, collecting the molten aluminum in a suitable container placed under the waste batteries after it has passed through, for example, a sieve or mesh or other suitable means for retaining the spent lithium-ion batteries and allowing the molten aluminum to pass through the gaps of such means. The aluminum can thus be separated and removed efficiently.

The temperature during the pyrolysis step should be in the range of about 700°C to about 1300°C or higher, or from 700°C to about 1050°C, which is below the melting point of copper, nickel and cobalt. At such temperatures, the aluminum forming the casing or other parts of the waste batteries will melt, as aluminum has a melting point of about 660°C. The upper limit of the pyrolysis temperature is 1300°C, but may be as low as 1050°C or lower because the melting points of copper, nickel, cobalt, etc., which may also be present in the Waste batteries, will only melt at above 1050°C and thus remain as solids and can be recovered later in smelting step. This step is carried out while feeding conventional industrial gas such as air, oxygen, inert gas such as carbon dioxide or nitrogen or mixtures thereof during the pyrolysis step.

In the size reduction step the contents of the battery, from which the aluminum casing and other aluminum parts have been removed, are reduced in size, depending on the scale of the equipment available for further treatment. Usually, reduction to a size of up to about 50 cm is often sufficient, but reduction to a size of less than about 20 cm may be beneficial. A size of 50 cm or 20 cm, respectively, means that object fits within a sphere having a diameter of 50 cm or 20 cm, respectively. For some purposes reduction to a size of 1 cm or less might be useful.

This treatment is useful both for increasing the reaction efficiency by increasing the surface area and for facilitated feeding during the smelting step. The size reduction method is not particularly limited, but can be carried out by crushing, cutting, dismantling by hand or robot or a different means for automated dismantling, sawing or punching using conventionally known machinery such as (preferably automatic) crushers (such as a cutter mixer), punches or saws or any other suitable means for parting or compressing to the desired size.

In dismantling, the cells or modules of pyrolyzed batteries are separated by hand, by robot or by any other automated means of dismantling, which inherently results in a size reduction of the pyrolyzed batteries.

Optionally, after the size reduction the pyrolyzed and size reduced waste batteries can be packed. Suitable packaging material is, in principle, not particularly limited. Suitable packing materials are, for example, paper, plastic, metal or cardboard, either in sheets or as container (e.g. boxes or bags) and can be sealed either by mechanical means such as folding or by other means such as gluing. Plastic or metal sheets can also be soldered or welded. If metals are used it might be advantageous to use metals present anyway in the batteries or the following process steps.

If the size reduction is carried out by dismantling, for example dismantling by hand, robot or other automated means, the parts obtained by dismantling can be packaged immediately after dismantling, almost as if it was the same process step to avoid formation of dust.

In another embodiment the particle size of 1 cm or less of the pyrolyzed and size reduced waste batteries can be desirable, which can also be achieved by conventional techniques as mentioned before, or conventional means of shredding or milling to generate smaller particles with a size of 1 cm or less.

Optionally, after the size reduction the pyrolyzed and size reduced waste batteries can be extracted with an aqueous, i.e a water containing solvent in order to remove lithium. Consequently, this will result in a method of recovering valuable metals from waste batteries further comprising the steps of: - subjecting the pyrolyzed, size-reduced waste batteries with an aqueous solvent, thereby extracting lithium;- applying solid-liquid separation. Preferably, water is used for the extraction of lithium. The aqueous solvent may be reused for various batches of the pyrolyzed and size reduced waste batteries, which will reduce the amount of water used and at the same time result in aqueous solutions of lithium compounds with higher lithium concentrations. The solid-liquid separation can be carried out by conventional means such as filtration, centrifugation, decantation, sedimentation or combinations thereof.

Optionally, after the size reduction the pyrolyzed and size reduced waste batteries can be agglomerated in the shape of briquette, extruded, provided that the size has become small enough for such steps, for which sizes of 1 cm or less usually are sufficient.

Optionally, after the size reduction and once the particle size of the pyrolyzed and size reduced waste batteries is sufficiently small, said pyrolyzed and size reduced waste batteries can be delivered with an $O_2$-bearing gas and injected through a submerged lance during the smelting step.

Optionally, the pyrolyzed and size reduced waste batteries can contain 10 to 50 weight percent of water. The water present can be the result of water addition, filtering of a suspension or other sources.

In a subsequent step the pyrolyzed, size reduced waste batteries are subjected to the smelting step in which they are treated at temperatures of 1350°C or higher under oxidizing conditions.

A suitable smelting process is described, for example, in WO 2022/248436. A suitable smelting furnace is employed in the smelting step. In an embodiment the smelting furnace is equipped with means for submerged injection of an $O_2$-bearing gas.

In an embodiment of the method, the smelting step is carried out in a way wherein a metallurgical charge comprising slag formers and the pyrolyzed, size reduced waste batteries containing at least Nickel (Ni), Aluminum (Al) and Carbon (C), but optionally also containing a metal selected from the group consisting of Cobalt (Co), Lithium (Li), Manganese (Mn) and combinations thereof, are subjected to a process comprising the steps of:

- providing a metallurgical smelting furnace equipped with means for the submerged injection of an $O_2$-bearing gas;
- defining an oxidizing level Ox characterizing oxidizing smelting conditions according to the formula:

$$Ox = pCO_2 / (pCO + pCO_2),$$

wherein 0.1 < Ox < 1, pCO and $pCO_2$ are the partial pressures of CO and $CO_2$ in contact with the melt;

- preparing the metallurgical charge;
- oxidizing smelting the metallurgical charge by injecting an O2-bearing gas into the melt to reach the defined oxidizing level Ox, thereby obtaining an alloy with Ni, and a slag containing at least one of CaO, $Al_2O_3$ and $SiO_2$ ;
- liquid/liquid separation of the alloy from the slag;

In this process, the sequence of the steps of "defining an oxidizing level Ox" and of "preparing the metallurgical charge" can be exchanged.

By "slag formers" are meant: one or more of, for example, CaO, $Al_2O_3$ and $SiO_2$. Other slag formers, well known to the skilled person, may also be present. The slag forming compounds may be added as such, or they may be obtained in situ from easily oxidized metals present in the charge.

The minimal value of 0.1 for the oxidizing level Ox is determined by the need for the generation of a sufficient amount of $CO_2$ for heating up and melting a metallurgical charge, as the generation of CO only would generally not suffice. The upper limit of less than 1 corresponds to the avoidance of extremely oxidizing conditions, which would preclude the major part of the Ni to report to the alloy in the smelting step. It is hereby assumed that CO and $CO_2$ are in contact with the melt, thereby ensuring the control of the redox conditions.

The sequential order of the steps that define the oxidizing Ox level and of preparing the metallurgical charge is uncritical as long as the appropriate conditions of the formulae are met.

The oxidizing level of the step is defined by the parameter Ox, i.e., the $pCO_2$ to $(pCO+pCO_2)$ ratio. In practice, this level will result in a major part of the Ni reporting to the alloy. The residual Ni will report to the slag, amounting to a concentration of more than 0.5% by weight, preferably of more than 1%.

According to the above embodiments, the oxidizing operating conditions result in the full oxidation of at least part of the C to $CO_2$, producing the necessary energy to melt the charge. Thanks to this oxidative smelting step, pyrolyzed battery with carbon content can be processed.

Optionally, applying the formulae for the smelting step shown above leads to an autogenous charge, which means that the step of oxidizing smelting can be performed by making use of the energy contained in the waste batteries. No extra energy needs to be added, nor as fuel, cokes, or other carbon source, nor as reactive compound in the rest of the metallurgical charge. Nonetheless, in this case, additional heat may still be provided by using cokes or other carbon source, in particular fuel or gas, which may be provided by submerged injection mixed with an $O_2$-bearing gas. To achieve autogenous smelting, a minimum amount of 3 weight percent, in particular 5 weight percent of aluminum should be contained in the entire pyrolyzed batteries. If the aluminum content in the pyrolyzed batteries is too low, aluminum can be added; for example, waste batteries with a higher aluminum content, such as cells and modules, can be combined with the pyrolyzed batteries.

In an embodiment, the smelting process can be run under conditions wherein the smelting step yields a lithium-containing slag exhibiting a content of MnO of 10% to 50% or more, or 20% to 40% or more, based on the weight of the total amount of slag. It has been observed that amounts of MnO in the specified range in the slag suppress MgO dissolution into the slag from magnesia-bearing refractory bricks lining the furnace. Having at least 20% of MnO in the slag fully shows the effect of suppressing MgO dissolution. The upper limit of 50% MnO in the slag helps to keep the melting point of the slag sufficiently low. Having at most 40% of MnO in the slag is preferred.

In another embodiment, the smelting process can be run under conditions wherein the smelting step yields a lithium-containing slag exhibiting a content of $P_2O_5$ of from 0,5% to 10%. Phosphorus typically originates from electrolytes in the Li-ion batteries and reports to the slag as $P_2O_5$. Lithium iron phosphate (LFP) batteries typically contain more phosphorous than NMC batteries, but no cobalt and nickel. In an industrial setup, recyclers may have to deal with charges that contain such LFP batteries mixed with NMC batteries, which would contribute to the overall content of phosphorus in the slag.

In yet another embodiment, the smelting process can be run under conditions wherein the smelting step comprises addition of calcium oxide and alumina and wherein the $(CaO + 0.4MnO)/Al_2O_3$ ratio is above 0.25. This helps to keep the melting point of the slag sufficiently low.

The present method has the technical effect of reducing the amount of slag generated, it will reduce the amount of heat generation and it will suppress the undesirable intense evulsion of gases during the smelting step. In addition, metallic aluminum can be directly recovered as metal without loss of nickel and cobalt.

## Examples

## Example 1

As waste batteries, spent Li-ion batteries were processed by using the pyrolysis method described in JP6840512B2. Casing material for battery module and cell inside the module are aluminum. Thus, they were melted off and separated from other constituents of battery.

By applying this pyrolysis process, it was confirmed that all of electrolyte and plastics contained in the battery pack were evaporated or oxidized to CO or $CO_2$ gas and 70 % of total aluminum melted off. No loss of nickel and cobalt was observed during the pyrolysis. The composition of solid battery residue after the heat treatment is shown in table 1.

500 kg of such residue after pyrolysis was fed to a furnace with a diameter of 1 m, lined with chrome-magnesia refractory bricks. 42 kg of limestone were added together with the solid residue. The amount of limestone was chosen to achieve (CaO+0.4MnO/ $Al_2O_3$) = 0.74.

A bath temperature of 1500-1550°C was maintained, which is suitable to maintain both the slag and the alloy sufficiently fluid for easy tapping and handling. The heat was supplied by the oxidation of aluminum and C in the solid residue, using submerged $O_2$ injection. The injection rate was chosen to guarantee strongly reducing conditions, i.e. $pO_2$ of $10^{-9}$. Natural gas was added to maintain burner flame temperature above bath temperature. After 1 h of heating, the produced alloy and slag were separated by tapping. Table 1 shows the analyses of the input and output phases of the process. During processing, small quantities of materials were captured as fume.

Table 1: Input and output phases of the process

| Input | Mass (kg) | Composition (%) | | | | | | | | |
|---|---|---|---|---|---|---|---|---|---|---|
| | | Ni | Co | Cu | SiO$_2$ | CaO | Al (Al$_2$O$_3$) | Li (Li$_2$O) | Mn (MnO) | C |
| Battery residue | 500 | 13.9 | 7.3 | 9.9 | - | - | 6.0 | 3.7 | 7.8 | 29.3 |
| Limestone | 42 | - | - | - | 4.8 | 53.3 | - | - | - | 11.4 |
| **Output** | | | | | | | | | | |
| Alloy | 155 | 44.7 | 22.9 | 31.3 | - | - | - | - | 1.1 | - |
| Slag 1 | 171 | 0.2 | 0.8 | 0.6 | 1.2 | 13.0 | (32.5) | (22.7) | (27.9) | - |

**Comparative example 2**

Same battery as one in example 1 was used, although it was fed directly to smelter without pyrolysis. 500 kg of spent Li-ion battery modules were fed to a furnace with a diameter of 1 m, lined with chrome-magnesia refractory bricks. 100 kg of limestone were added together with the battery.

The amount of limestone was chosen to achieve (CaO+0.4MnO)/$Al_2O_3$ = 0.51.

A bath temperature varied between 1450-1600°C due to the intense heat generation by oxidation of aluminum. The heat was supplied by the oxidation of aluminum and C in the battery, using submerged $O_2$ injection. The injection rate was chosen to maintain a $pO_2$ of $10^{-9}$. Natural gas was added to maintain burner flame temperature above bath temperature.

Flame from feed port was often observed as the intense release of explosive gas due to oxidation of remaining plastic and electrolyte in battery led to overpressure inside the furnace.

After 1 h of heating, the produced alloy and slag were separated by tapping.

Table 2 shows the analyses of the input and output phases of the process. During processing, small quantities of materials were captured as fume.

Table 2: Input and output phases of the process

| Input | Mass (kg) | Composition (%) | | | | | | | | |
|---|---|---|---|---|---|---|---|---|---|---|
| | | Ni | Co | Cu | SiO$_2$ | CaO | Al (Al$_2$O$_3$) | Li (Li$_2$O) | Mn (MnO) | C |
| Batteries | 500 | 9.9 | 5.3 | 6.8 | - | - | 14.1 | 2.8 | 5.7 | 24.8 |
| Limestone | 100 | - | - | - | 4.8 | 53.3 | - | - | - | 11.4 |
| **Output** | | | | | | | | | | |
| Alloy | 108 | 45.7 | 23.3 | 30.5 | - | - | - | - | 0.5 | - |
| Slag 2 | 260 | 0.1 | 0.4 | 0.3 | 1.8 | 20.3 | (50.8) | (11.7) | (13.6) | - |

Conclusion: The weight ratio of produced slag over alloy is 1.1 for example 1 and 2.4 for example 2. 2.2 times larger weight of slag was produced in order to produce same weight of alloy by processing spent Li-ion battery. In addition, it was more difficult to maintain smelting temperature during smelting due to intense heat generation by oxidation of large quantity of aluminum in example 2, whereas temperature control was easily carried out due to less aluminum content in feed in example 1. In smelting step of example 2, flame from feed port was often observed as the intense release of explosive gas due to oxidation of remaining plastic and electrolyte in battery led to overpressure inside the furnace, whereas no flame was visible in smelting step of example 1.

**Claims**

1. Method of recovering valuable metals from waste batteries comprising the steps of -a pyrolysis step comprising pyrolysis of the waste batteries at a temperature of from about 700°C to about 1300°C, obtaining pyrolyzed batteries; -a size reduction step, comprising size reduction of the pyrolyzed batteries; -a smelting step, comprising smelting the pyrolyzed, size reduced waste batteries at temperatures of 1350°C or higher under oxidizing conditions.

2. The method of claim 1, wherein pieces of pyrolyzed, size reduced waste batteries exhibit a diameter of not more than 20 cm and/or the loss of nickel and cobalt metal before the smelting step is less than 2 weight percent.

3. The method of claim 1 or 2, wherein during the pyrolysis step air is fed.

4. The method of any of the preceding claims, wherein the pyrolyzed, size reduced waste batteries are packed, in particular into paper, plastic or combinations thereof.

5. The method of any of the preceding claims, wherein the pyrolyzed, size reduced waste batteries are subjected to extraction of lithium with an aqueous solvent.

6. The method of any of the preceding claims, wherein the smelting step yields a lithium-containing slag exhibiting a content of MnO of 10% to 50% or more, based on the weight of the total amount of slag.

7. The method of any of the preceding claims, wherein the smelting step yields a lithium-containing slag exhibiting a content of $P_2O_5$ of from 0,5% to 10%.

8. The method of any of the preceding claims, wherein the smelting step comprises addition of calcium oxide and alumina and wherein the $(CaO + 0.4MnO)/ Al_2O_3$ ratio is above 0.25.

9. The method of any of the preceding claims wherein in the smelting step a metallurgical charge comprising slag formers and the pyrolyzed, size reduced waste batteries containing Co, Ni, metallic Al, and C, and are subjected to a process comprising the steps of:

    - providing a metallurgical smelting furnace equipped with means for the submerged injection of an $O_2$-bearing gas;
    - defining an oxidizing level Ox characterizing oxidizing smelting conditions according to the formula:

$$Ox = pCO_2 / (pCO + pCO_2),$$

    wherein $0.1 < Ox < 1$, pCO and $pCO_2$ are the partial pressures of CO and $CO_2$ in contact with the melt;
    - preparing the metallurgical charge;
    - oxidizing smelting the metallurgical charge by injecting an O2-bearing gas into the melt to reach the defined oxidizing level Ox, thereby obtaining a first alloy with a major part of Ni, and a slag containing residual Ni and Co;
    - liquid/liquid separation of the alloy from the slag.

10. The method of claim 10, wherein slag formers are selected from the group consisting of CaO, $Al_2O_3$, $SiO_2$ and combinations thereof.

11. The method of any of the preceding claims, wherein the pyrolysis step is carried out at a temperature of from about 700°C to about 1050°C.

12. The method of any of the preceding claims, further comprising a steps of: - subjecting the pyrolyzed, size-reduced waste batteries with an aqueous solvent, thereby extracting lithium; - applying solid-liquid separation.

## EUROPEAN SEARCH REPORT

**Application Number**

EP 23 21 9716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/352570 A1 (ROHDE WOLFGANG [DE] ET AL) 3 November 2022 (2022-11-03) | 1-7,11, 12 | INV.<br>C22B1/00 |
| Y | * abstract * | 8 | C22B1/02 |
| A | * examples 1, 6 *<br>* paragraph [0205] - paragraph [0207] *<br>* paragraph [0217] - paragraph [0218] *<br>* paragraph [0102] *<br>- - - - - | 9,10 | C22B5/02<br>C22B7/00<br>C22B9/10<br>C22B23/02<br>C22B26/12 |
| X | EP 4 115 999 A1 (SUMITOMO METAL MINING CO [JP]) 11 January 2023 (2023-01-11)<br>* abstract *<br>* figure 1 *<br>* paragraph [0033] *<br>* paragraph [0059] - paragraph [0060] *<br>- - - - - | 1-3,11 | H01M10/54<br>C22B1/14 |
| X | JP 2023 147089 A (SUMITOMO METAL MINING CO) 12 October 2023 (2023-10-12)<br>* abstract *<br>* paragraph [0076] - paragraph [0078] *<br>* paragraph [0082] *<br>* paragraph [0088] *<br>* paragraph [0091] - paragraph [0092] *<br>- - - - - | 1-4,11 | |
| Y | US 2023/369667 A1 (YAGI RYOHEI [BE] ET AL) 16 November 2023 (2023-11-16)<br>* abstract *<br>* paragraph [0064] *<br>* table 4 *<br>- - - - -<br>-/-- | 8 | **TECHNICAL FIELDS SEARCHED (IPC)**<br><br>C22B<br>H01M |

The present search report has been drawn up for all claims

| Place of search | Date of completion of the search | Examiner |
|---|---|---|
| The Hague | 17 June 2024 | Kim Lee, Bij Na |

page 1 of 2

| | Europäisches Patentamt European Patent Office Office européen des brevets | **EUROPEAN SEARCH REPORT** | **Application Number** EP 23 21 9716 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NEUMANN JONAS ET AL: "Recycling of Lithium-Ion Batteries-Current State of the Art, Circular Economy, and Next Generation Recycling", ADVANCED ENERGY MATERIALS, vol. 12, no. 17, 10 May 2022 (2022-05-10), page 2102917, XP055966175, DE ISSN: 1614-6832, DOI: 10.1002/aenm.202102917 Retrieved from the Internet: URL:https://onlinelibrary.wiley.com/doi/full-xml/10.1002/aenm.202102917> * abstract * * subsection 3.1.3. Thermal Pre-Treatment * | 1-12 | |
| A | EP 4 286 545 A1 (SUMITOMO METAL MINING CO [JP]) 6 December 2023 (2023-12-06) * abstract * | 1-12 | |
| A | WO 2023/217710 A1 (UMICORE NV [BE]) 16 November 2023 (2023-11-16) * abstract * | 1-12 | **TECHNICAL FIELDS SEARCHED (IPC)** |
| A | CN 111 534 697 A (CHINA ENFI ENG CORP) 14 August 2020 (2020-08-14) * abstract * | 1-12 | |
| A | JP 2021 161456 A (SUMITOMO METAL MINING CO) 11 October 2021 (2021-10-11) * abstract * | 1-12 | |

The present search report has been drawn up for all claims

| Place of search | Date of completion of the search | Examiner |
|---|---|---|
| The Hague | 17 June 2024 | Kim Lee, Bij Na |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9716

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2024

| Patent document cited in search report | | Publication date | Patent family member(s) | | Publication date |
|---|---|---|---|---|---|
| US 2022352570 | A1 | 03-11-2022 | AU | 2020323235 A1 | 17-02-2022 |
| | | | CA | 3144716 A1 | 04-02-2021 |
| | | | CN | 114207161 A | 18-03-2022 |
| | | | EP | 4004244 A1 | 01-06-2022 |
| | | | JP | 2022541321 A | 22-09-2022 |
| | | | KR | 20220038441 A | 28-03-2022 |
| | | | TW | 202111131 A | 16-03-2021 |
| | | | US | 2022352570 A1 | 03-11-2022 |
| | | | WO | 2021018788 A1 | 04-02-2021 |
| EP 4115999 | A1 | 11-01-2023 | CN | 115066509 A | 16-09-2022 |
| | | | EP | 4115999 A1 | 11-01-2023 |
| | | | JP | 7409165 B2 | 09-01-2024 |
| | | | JP | 2021139019 A | 16-09-2021 |
| | | | KR | 20220131325 A | 27-09-2022 |
| | | | US | 2023104953 A1 | 06-04-2023 |
| | | | WO | 2021177005 A1 | 10-09-2021 |
| JP 2023147089 | A | 12-10-2023 | NONE | | |
| US 2023369667 | A1 | 16-11-2023 | NONE | | |
| EP 4286545 | A1 | 06-12-2023 | CN | 116829744 A | 29-09-2023 |
| | | | EP | 4286545 A1 | 06-12-2023 |
| | | | JP | 7276361 B2 | 18-05-2023 |
| | | | JP | 2022114647 A | 08-08-2022 |
| | | | KR | 20230121900 A | 21-08-2023 |
| | | | US | 2024084418 A1 | 14-03-2024 |
| | | | WO | 2022163179 A1 | 04-08-2022 |
| WO 2023217710 | A1 | 16-11-2023 | NONE | | |
| CN 111534697 | A | 14-08-2020 | NONE | | |
| JP 2021161456 | A | 11-10-2021 | JP | 7400590 B2 | 19-12-2023 |
| | | | JP | 2021161456 A | 11-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022248436 A
- WO 2012111690 A

- JP 7006438 B
- JP 6840512 B